# EUROPEAN PATENT APPLICATION

(11) **EP 0 778 088 A2**
(43) Date of publication of application: **11.06.1997**
(21) Application number: 96250280.3
(22) Date of filing: 05.12.1996
(51) Int. Cl.: B05D 7/22, B29C 41/20, B29C 41/46, B29C 41/04

(54) **Method and apparatus for molding lining in pipe**

(30) Priority: 06.12.1995 JP 317890/95
(71) Applicant: YAMATAKE-HONEYWELL CO. LTD., Tokyo 150 (JP)
(72) Inventor: Tamura, Hiroshi, c/o Yamatake-Honeywell Co., Ltd., Shibuya-ku, Tokyo (JP); Sugiyama, Nobuyuki, Yamatake-Honeywell Co., Ltd., Shibuya-ku, Tokyo (JP)
(74) Representative: Patentanwälte Wenzel & Kalkoff

(57) **Abstract**

In a method and apparatus for molding a lining in a pipe, a hot-meltable fluorine resin material is sealed in the pipe. The fluorine resin material is uniformly diffused on an entire inner circumferential face of the pipe by rotating the pipe. The fluorine resin material is urged against the inner circumferential face of the pipe by increasing the rotation speed of the pipe up to a predetermined rotation speed. The fluorine resin material urged against the inner circumferential face of the pipe is melted by heating the pipe to a predetermined temperature equal to or higher than the melting temperature of the fluorine resin material and less than the foaming temperature of the fluorine resin material. After the fluorine resin material is entirely melted, the fluorine resin material is cooled while rotating the pipe, thereby forming the lining having a predetermined thickness on the inner circumferential face of the pipe.

## Description

### Background of the Invention

The present invention relates to a method and apparatus for molding a lining in a pipe, in which the lining is formed on the inner face of the pipe.

Conventionally, a lining made of a fluorine resin is sometimes formed on the inner circumferential face of a pipe used as a duct for flowing, e.g., a pulp slurry or a plaster slurry, so as to increase corrosion resistance and wear resistance of the pipe and to make attachment of foreign matters difficult. When forming a lining on the inner circumferential face of a pipe of this type, injection molding is generally used wherein the pipe is set in a die, and thereafter a molten fluorine resin is forced with a pressure into a space where a lining is to be formed. With this injection molding, a core partly constituting the die may be corroded by the fluorine resin, and after the lining is formed, the core must be extracted. For these reasons, rotational molding is also employed with which molding is performed without using a die and without pressurizing the resin, thereby uniforming the molding quality.

To form a lining in accordance with this rotational molding, first, a powdery hot-meltable fluorine resin material is sealed in a horizontal pipe, and thereafter this pipe is heated and rotated about its axis as the center. The heating temperature is set to a temperature higher than the foaming temperature of the fluorine resin material. The rotation speed during rotation is set to a speed at which the fluorine resin material gathers at the lower portion in the pipe by its own weight when the fluorine resin material is not melted.

According to this rotational molding, a portion of the fluorine resin material in the pipe which comes into contact with the inner circumferential portion of the high-temperature pipe is melted first. This molten portion gradually and axially spreads in the pipe, so that the fluorine resin material is entirely melted. In this melting process, the molten portion of the fluorine resin material rotates together with the pipe due to its viscosity, and the non-molten powdery fluorine resin material moves upward along with rotation of the pipe and then toward the bottom portion in the pipe by its own weight as it slides on the molten portion.

More specifically, as the pipe rotates, the powdery fluorine resin material is repeatedly sprinkled on the face of the melt layer. When the powdery fluorine resin material is melted, the melt layer increases (grows). Thereafter, heating of the lining body is stopped, and the molten fluorine resin is cooled to solidify, thereby forming a uniform lining on the inner circumferential face of the pipe.

This rotational molding is suitable also for forming a lining on the inner circumferential face of the measurement pipe of an electromagnetic flowmeter interposed in the duct described above.

When a lining is formed by rotational molding, small corrugations are sometimes formed on the face of the molded portion, i.e., in the inner circumferential face of the lining to become a satin-like portion (sand-like portion). The satin-like portion is formed on the inner circumferential face of the lining in this manner probably because the temperature during molding is much higher than the foaming temperature of the fluorine resin material and that, during molding, the melt layer increases as the powdery fluorine resin material is deposited on the face of the melt layer of the fluorine resin material.

More specifically, since the fluorine resin material is heated to a temperature higher than the foaming temperature, the fluorine resin itself is decomposed to form bubbles in the molten portion. When these bubbles are broken on the face of the molten portion, the face of the molten portion becomes rough. When the powdery fluorine resin material is deposited on the face of the melt layer, a fluorine resin material which is not melted or is not melted completely remains on the face of the molten portion at the end of heating to roughen the face of the molten portion. When the face of the molten portion becomes rough in this manner, the face of the lining becomes satin-like.

If the face of the lining is satin-like, when, e.g., a pulp slurry or plaster slurry is flowed on this face, the solid particles of such a slurry tend to attach to the face of the lining easily. When the solid particles attach to the face of the lining, extra solid particles attach to the attached solid particles and are deposited. Then, the deposited solid particles grow to narrow the duct, thus increasing the flow resistance. In particular, when a deposit is formed at an electromagnetic flowmeter in this manner, the sectional area of the duct, i.e., the inner diameter of the duct changes to degrade the measurement precision.

If the inner circumferential face of the line is satin-like, not only the solid particles attach to it, but also the resistance against the flow of the pulp slurry or plaster slurry along the inner circumferential face of the lining increases, thus wearing the lining easily. When the lining wears to expose the inner circumferential face of the pipe, the pipe directly comes into contact with the slurry and is thus corroded. In an electromagnetic flowmeter, when the lining wears, dielectric breakdown tends to occur between the electrode and ground.

In order to eliminate the inconvenience of the satin-like inner circumferential face of the lining, a method is proposed as disclosed in, e.g., Japanese Patent Laid-Open No. 4-220524, wherein a cylindrical columnar core is mounted in the axial portion of the pipe, and a molten fluorine resin material is injected between the pipe and the core, thereby forming a lining. More specifically, if the outer circumferential face of the core is formed to have a mirror face, the shape of the outer circumferential face of the core is transferred to the inner circumferential face of the lining, thereby making the inner circumferential face of the lining to have a mirror face.

With this molding method using a core in this manner, however, since the core must also be heated to the same temperature as that of the pipe, an excessively long period of time is required for heating and cooling. In addition, if a core is used, the number of components is increased to complicate the structure of the lining molding apparatus. If a fluorine resin or the like is employed as the material of the lining, the core is corroded to require periodical exchange, leading to high running cost. In other words, the lining molding apparatus becomes expensive to increase the manufacturing cost of the product.

### Summary of the Invention

It is an object of the present invention to provide method and apparatus for molding a lining in a pipe, wherein the inner circumferential face of the lining is formed to have a mirror face while shortening the molding time and simplifying the molding apparatus.

In order to achieve the above object, according to the present invention, there is provided a method of molding a lining in a pipe, comprising the steps of sealing a hot-meltable resin powder material in the pipe, uniformly diffusing the resin powder material on an entire inner circumferential face of the pipe by rotating the pipe, urging the resin powder material against the inner circumferential face of the pipe by increasing a rotation speed of the pipe up to a predetermined rotation speed, melting the resin powder material urged against the inner circumferential face of the pipe by heating the pipe to a predetermined temperature not less than the melting temperature of the resin powder material and less than the foaming temperature of the resin powder material, and after the resin powder material is entirely melted, cooling the resin powder material while rotating the pipe, thereby forming the lining having a predetermined thickness on the inner circumferential face of the pipe.

### Brief Description of the Drawings

Fig. 1 is a schematic diagram showing the arrangement of a lining molding apparatus according to an embodiment of the present invention;
Fig. 2 is an enlarged sectional view of a holder as an example of a lock mechanism;
Figs. 3A to 3D are diagrams showing a procedure for forming a lining by using the lining molding apparatus shown in Fig. 1, in which Fig. 3A shows a state wherein a fluorine resin material is sealed in a pipe, Fig. 3B shows a state wherein the pipe is rotated, Fig. 3C shows a state wherein the fluorine resin material starts melting, and Fig. 3D shows a state when the fluorine resin material is melted entirely; and
Fig. 4 is a graph showing the relationship between the temperature and the degree of face roughness of the lining.

### Description of the Preferred Embodiment

The present invention will be described in detail with reference to the accompanying drawings. In the following embodiment, a method and apparatus for molding a lining on the measurement pipe of an electromagnetic flowmeter will be described.

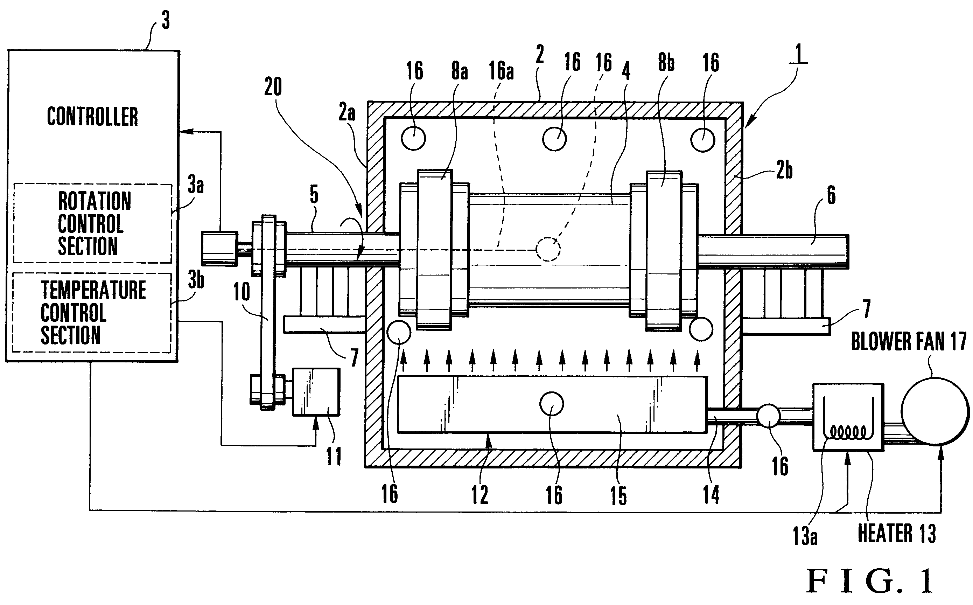

Fig. 1 shows a lining molding apparatus according to an embodiment of the present invention. In Fig. 1, a lining molding apparatus 1 is constituted by a heat-insulated furnace 2 connected to a rotating unit, a heating unit, and a cooling unit (to be described later), and a controller 3 for controlling the rotating unit, the heating unit, and the cooling unit. The heat-insulated furnace 2 has such a structure that heat in it will not be easily transferred to the outside. An electromagnetic flowmeter measurement tube 4 which is rotatably held by main shafts 5 and 6 is accommodated in the heat-insulated furnace 2. The measurement tube 4 has opening portions at its two ends and is formed into a stainless steel cylinder.

The main shafts 5 and 6 respectively have a pair of holders 8a and 8b each having one end for holding a corresponding one of the two end portions of the measurement tube 4 in the heat-insulated furnace 2, and are rotatably supported to extend through a pair of opposing side walls 2a and 2b of the heat-insulated furnace 2. When the measurement tube 4 is held by the holders 8a and 8b, the axes of the main shafts 5 and 6 coincide with each other to form one axis. Main shaft bearing members 7 are provided on the outer faces of the side walls 2a and 2b of the heat-insulated furnace 2.

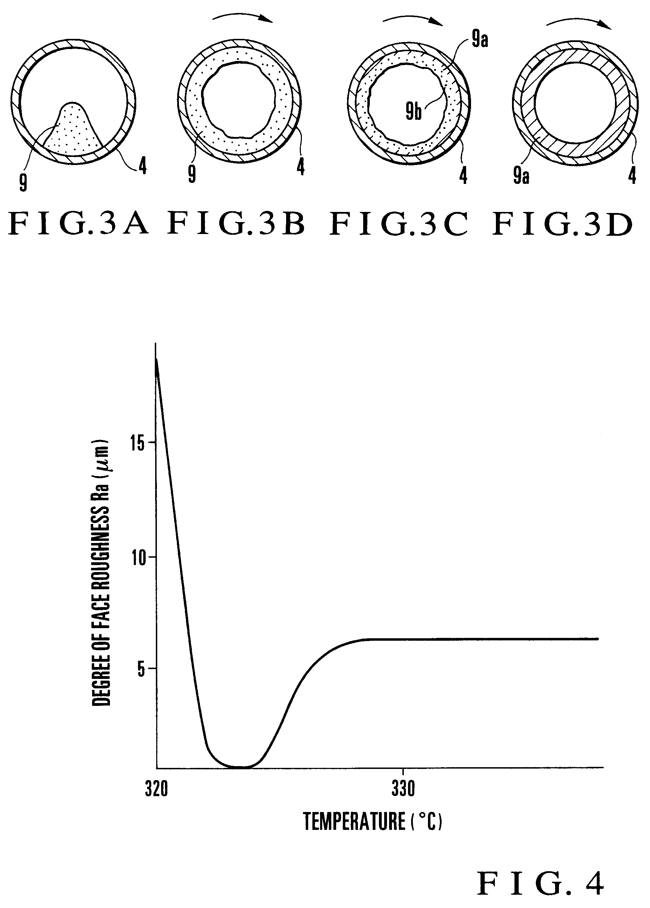

When the holders 8a and 8b engage with the end portions of the measurement tube 4, they close the opening portions of the measurement tube 4 and rotate together with the main shafts 5 and 6. The holders 8a and 8b become movable in the axial direction with respect to the main shafts 5 and 6 when a lock mechanism (to be described later) is unlocked. More specifically, when the holders 8a and 8b are moved in the axial direction with respect to the main shafts 5 and 6 to increase the interval between the holders 8a and 8b, the measurement tube 4 can be removed from the holders 8a and 8b. To mount the measurement tube 4, the interval between the holders 8a and 8b is decreased to clamp the measurement tube 4, thereby fixing the measurement tube 4 with the main shafts 5 and 6. When holding the measurement tube 4 with the holders 8a and 8b, a preset amount of powdery hot-meltable fluorine resin material 9 is filled in the measurement tube 4 in advance, as shown in Fig. 3A. When the measurement tube 4 accommodating the fluorine resin material 9 is held by the holders 8a and 8b and is sealed, the fluorine resin material 9 is sealed in the measurement tube 4.

A reinforcing punching plate or the like is mounted and welded on the inner circumferential portion of the electromagnetic flowmeter measurement tube 4, but is not illustrated in Figs. 3A to 3D. A measurement pipe loading/unloading port (not shown) having a door is mounted on the heat-insulated furnace 2. The measurement tube 4 is loaded in or unloaded from the heat-insulated furnace 2 through this measurement pipe loading/unloading port having the door.

The main shaft 5 is coupled to a motor 11 through a belt-type transmission mechanism 10 at an end portion opposite to the holder 8a. The motor 11 has an ability of rotating the measurement tube 4 at such a rotation speed that the fluorine resin material 9 sealed in the measurement tube 4 is urged against the inner circumferential face of the measurement tube 4 with a centrifugal force, as shown in Fig. 3A. The main shafts 5 and 6, the holders 8a and 8b, the belt-type transmission mechanism 10, and the motor 11 constitute a pipe rotating unit 20.

A heating unit 12 for heating the measurement tube 4 is arranged at a lower portion in the heat-insulated furnace 2. The heating unit 12 is constituted by a heater 13, a plurality of nozzles 15, and a blower fan 17. The heater 13 has a heater element 13a which generates heat by supplying power to it. The nozzles 15 are connected to the heater 13 through an air supply pipe 14. The blower fan 17 blows air heated by the heater 13 to the measurement tube 4 through the air supply pipe 14 and nozzles 15.

The nozzles 15 are disposed in a region in the heat-insulated furnace 2 where they can directly blow hot air to the holders 8a and 8b, and blow air supplied from the air supply pipe 14 to the measurement tube 4 and holders 8a and 8b. Air blown from the nozzles 15 is indicated by blank arrows in Fig. 1. When the heater 13 is driven, the heating unit 12 blows hot air upward through the nozzles 15, and the measurement tube 4 and the holders 8a and 8b are heated with this hot air.

When the blower fan 17 is driven while the heater 13 is not driven, non-heated air is blown from the nozzles 15. Thus, in this embodiment, the heating unit 12 is used also as a cooling unit for cooling the measurement tube 4 with non-heated air. In place of using the heating unit 12 as the cooling unit as well, an exclusive cooling unit may be separately provided.

Reference numerals 16 denote a plurality of thermocouples mounted on the inner wall face of the heat-insulated furnace 2, to the air supply pipe 14 and nozzles 15 of the heating unit 12, and in the measurement tube 4. The thermocouples 16 send temperature signals to the controller 3 through lead wires. A lead wire 16a of the thermocouple 16 mounted on the measurement tube 4 extends to the shaft end of the main shaft 5 through the interiors of the holder 8a and main shaft 5 and is connected to the controller 3.

The controller 3 has a rotation control section 3a and a temperature control section 3b. The rotation control section 3a performs an ON/OFF switching control operation and a rotation speed control operation for the motor 11. The temperature control section 3b performs an ON/OFF switching control operation for the heater 13. More specifically, when a start switch (not shown) is turned on, the rotation control section 3a drives the motor 11 to start rotation. After the motor 11 is started, the rotation control section 3a controls the motor 11 in accordance with a rotation increase rate so that the rotation speed of the measurement tube 4 increases gradually up to the maximum rotation speed determined in advance.

The maximum rotation speed described above is set to such a value that the fluorine resin material 9 in the measurement tube 4 is urged against the inner circumferential face of the measurement tube 4 by the centrifugal force but will not move in the measurement tube 4. The rotation increase rate is set such that the fluorine resin material 9 spreads to be dispersed in the entire inner circumferential face of the measurement tube 4 at the initial stage of rotation.

When the motor 11 is driven, the temperature control section 3b drives the heater 13 of the heating unit 12 simultaneously. When driving the heater 13, the heat energy of the heater 13 is controlled such that the fluorine resin material 9 is heated to a preset temperature. The temperature of the fluorine resin material 9 is obtained from outputs from the thermocouples 16 arranged at the respective portions of the apparatus. The preset heating temperature of the fluorine resin material 9 is set to a temperature equal to or higher than the melt temperature of the fluorine resin material 9 and lower than the foaming temperature of the fluorine resin material 9. In this embodiment, the plurality of thermocouples 16 are attached to portions other than the interior of the measurement tube 4 in order to detect the temperature of the fluorine resin material 9 at high precision.

The temperature control section 3b controls the heating unit 12 so that the fluorine resin material 9 is maintained at a predetermined temperature for a predetermined period of time after it has reached the preset heating temperature, and that power supply to the heater element 13a of the heater 13 is stopped after the lapse of a preset period of time. At this time, driving of the blower fan 17 is continued even after power supply to the heater element 13a of the heater 13 is stopped. Temperature control for maintaining the fluorine resin material 9 at the predetermined temperature is performed by, e.g., intermittently turning on/off power supply to the heater element 13a of the heater 13. The preset heating time of the fluorine resin material 9 is determined in accordance with the volume of the fluorine resin material 9, i.e., the thickness of the lining, and is set to a time required for entirely melting the fluorine resin material 9.

The rotation control section 3a and the temperature control section 3b perform control operations to stop driving the motor 11 and blower fan 17, respectively, when the fluorine resin material 9 reaches a sufficiently solidifiable temperature after power supply to the heater element 13a of the heater 13 is stopped.

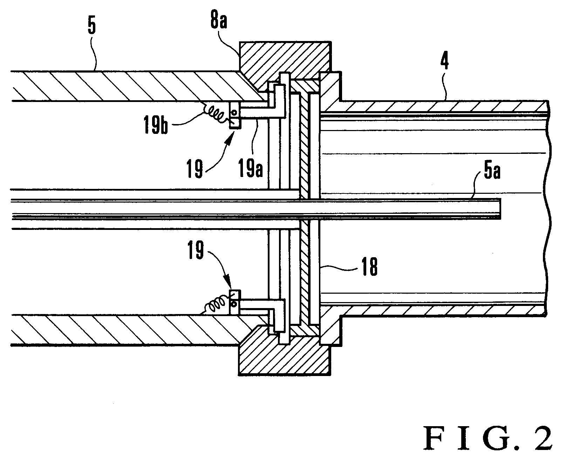

Fig. 2 shows a holder portion as an example of a lock mechanism. In Fig. 2, the holder 8a is fixed to the end portion of the main shaft 5 with a lock mechanism 19, and seals the opening end portion of the measurement tube 4 together with a disk-like sealing member 18 having a flange portion on its peripheral portion. The lock mechanism 19 is constituted by L-shaped pawls 19a and springs 19b. The pawls 19a engage with engaging holes formed in the inner circumferential face of the holder 8a. The springs 19b bias the pawls 19a toward the axis of the main shaft 5. When the main shaft 5 rotates, the distal end portions of the pawls 19a engage with the engaging holes in the inner circumferential face of the holder 8a with the centrifugal force against the springs 19b, thereby fixing the holder 8a on the main shaft 5. When rotation of the main shaft 5 is stopped, the pawls 19a are restored by the springs 19b to unlock the lock mechanism 19. After unlocking, when the holder 8a is pivoted to be aligned with a slide position and the holder 8a is slid in the axial direction of the main shaft 6, the measurement tube 4 is attached to/detached from the holder 8a. The holder 8b locks and slides on the main shaft 6 in the same manner as the holder 8a. Reference numeral 5a denotes a pipe. The pipe 5a guides the lead wire connected to the thermocouple in the measurement tube 4 to the outside and introduces the fluorine resin material 9 into the measurement tube 4.

The operation of the lining molding apparatus shown in Fig. 1 and the lining molding method will be described with reference to Figs. 3A to 3D. First, as shown in Fig. 3A, the powdery fluorine resin material 9 is placed in the measurement tube 4 in an amount corresponding to the inner diameter of the measurement tube 4 and the thickness of a lining to be obtained, and the measurement tube 4 is mounted in the lining molding apparatus 1, as shown in Fig. 1. Hence, the fluorine resin material 9 is sealed in the measurement tube 4.

Subsequently, when the start switch is turned on, the rotation control section 3a of the controller 3 drives the motor 11 of the rotating unit 20, so that the measurement tube 4 starts rotation. Simultaneously, the temperature control section 3b of the controller 3 drives the heater 13 of the heating unit 12 to start heating and air blowing operations. At this time, since the rotation speed of the measurement tube 4 increases gradually, the fluorine resin material 9 in the measurement tube 4 is agitated in the measurement tube 4 at the initial stage of rotation, and is uniformly diffused on the entire inner circumferential face of the measurement tube 4. The degree of agitation of the fluorine resin material 9 decreases as the rotation speed of the measurement tube 4 increases to increase the centrifugal force applied to the fluorine resin material 9.

When the rotation speed of the measurement tube 4 reaches the maximum rotation speed, as shown in Fig. 3B, the fluorine resin material 9 is urged against the inner circumferential face of the measurement tube 4 by the centrifugal force and does not move in the measurement tube 4. After the rotation speed of the measurement tube 4 has reached the maximum rotation speed as described above, it is maintained at this maximum rotation speed because the rotation control section 3a controls the motor 11.

As the motor 11 reaches the maximum rotation speed, the measurement tube 4 and the holders 8a and 8b are heated by the heating unit 12 to set the interior of the heat-insulated furnace 2 in the high-temperature atmosphere. The fluorine resin material 9 is heated as heat of the measurement tube 4 and holders 8a and 8b is conducted to it. When the fluorine resin material 9 reaches its melting temperature, it starts to melt.

The fluorine resin material 9 starts to melt from its portions in contact with the inner circumferential face of the measurement tube 4 and with the closed faces of the holders 8a and 8b, as shown in Fig. 3C, to form a melt layer 9a. Reference numeral 9b denotes a non-melt layer. As the fluorine resin material 9 melts, the melt layer 9a gradually and axially spreads to the non-melt layer 9b in the measurement tube 4, as shown in Fig. 3D. The entire amount of the fluorine resin material 9 is melted in this manner to form a lining having a predetermined thickness. At this time, the temperature control section 3b controls the heater 13 to maintain the temperatures in the measurement tube 4, of the holders 8a and 8b and fluorine resin material 9, and of the atmosphere in the heat-insulated furnace 2 at a predetermined value. In other words, the temperature of the molten fluorine resin material 9 will not increase up to the foaming temperature.

After the fluorine resin material 9 is entirely melted, the temperature control section 3b stops power supply to the heater element 13a of the heater 13 and drives only the blower fan 17. Thus, the heating unit 12 is used as the cooling unit to cool the measurement tube 4, the holders 8a and 8b, and the fluorine resin material 9, and the atmosphere in the heat-insulated furnace 2. When the temperatures of these portions reach the solidifying temperature of the fluorine resin material 9, the fluorine resin material 9 in the measurement tube 4 starts solidification from its portions which are in contact with the measurement tube 4 and holders 8a and 8b. As cooling progresses, the fluorine resin material 9 entirely solidifies. Hence, solidification of the fluorine resin material 9 is performed while rotating the measurement tube 4 at the maximum rotation speed.

When the fluorine resin material 9 is melted and then solidified in this manner, a lining made of the fluorine resin material 9 and having a predetermined thickness is formed on the inner circumferential face of the measurement tube 4. Thereafter, the rotation control section 3a and temperature control section 3b stop driving the motor 11 and blower fan 17, respectively. As a result, rotation of the measurement tube 4 is stopped, and the molding process of the lining is ended.

According to the lining molding method described above, the fluorine resin material 9 is melted while it is spreadingly dispersed on the entire inner circumferential face of the measurement tube 4 such that it will not move. In addition, since the melted fluorine resin material 9 is not heated up to the foaming temperature, it will not be decomposed to foam. For this reason, the fluorine resin material 9 solidifies without changing its smooth face in the molten state, thus making the inner circumferential face of the lining very smooth. Since heating and cooling need be performed only for the measurement tube 4 and the holders 8a and 8b that hold the measurement tube 4, the heat capacity can be small when compared to a case wherein the shape of the outer circumferential face of the core is transferred to the inner circumferential face of the lining.

Since the fluorine resin material 9 is melted and solidifies as it is urged against the inner circumferential face of the measurement tube 4 with the centrifugal force, a lining having a very smooth inner circumferential face can be formed without using a core.

According to an experiment conducted by the present inventors, in a lining formed in accordance with the molding method of the present invention, the degree of face roughness Ra (µm) of the inner circumferential face changed depending on the heating temperature (°C). The experiment the result of which is shown in Fig. 4 was conducted by using a fluorine resin material 9 whose melting start temperature (melting temperature) was 320°C and temperature at which it was decomposed to generate gas (a foaming temperature) was 330°C. From Fig. 3, it is known that the temperature at which the degree of face roughness Ra of the inner circumferential face of the lining becomes very small falls within the temperature range between the melting temperature and the foaming temperature.

In this embodiment, as the fluorine resin material 9, PFA resin (tetrafluoroethylene-perfluoroalkoxyethylene copolymer resin) was used. This PFA resin has a melting temperature of 320°C and a foaming temperature of 330°C.

The maximum rotation speed of the measurement tube 4 during molding was changed in accordance with the diameter of the measurement tube 4 so that the centrifugal force acting on the fluorine resin material 9 became constant. When a measurement tube 4 having a diameter of 80 mm was used, the maximum rotation speed was set to 850 rpm. When a measurement tube 4 having a diameter of 300 mm was used, the maximum rotation speed was set to 439 rpm.

In the embodiment described above, the target on which a lining is to be formed is the electromagnetic flowmeter measurement tube 4. However, the present invention can be applied to any pipe as far as it constitutes a duct. Also, the material of the pipe on which a lining is to be formed is not limited to stainless steel. As the fluorine resin material 9, one which is of a type different from that of the PFA resin described above can be employed.

As has been described above, according to the present invention, since the fluorine resin material solidifies while maintaining its smooth face in the molten state, the inner circumferential face of the lining becomes a mirror face without employing a method of transferring the outer circumferential face of the core to the inner circumferential face of the lining. Since heating and cooling need be performed only for the pipe and the fluorine resin material, the heat capacity can be small when compared to a case employing the method of transferring the outer circumferential face of the core to the inner circumferential face of the lining. Therefore, a lining can be formed having an inner circumferential face as a mirror face while shortening the heating time and cooling time.

Since lining is performed at a low temperature, the fluorine resin material does not foam, so that a lining having an excellent quality can be obtained. Thus, the quality of an electromagnetic flowmeter that cannot but use stainless steel, which is a non-magnetic material, as the material can be improved, because the foaming phenomenon tends to occur particularly when the pipe is made of stainless steel.

Since the molding apparatus can be simplified as compared to a molding apparatus using a core, a lining having an inner circumferential face as a mirror face can be obtained with an inexpensive lining molding apparatus.

## Claims

1. A method of molding a lining in a pipe, characterized by comprising the steps of:
sealing a hot-meltable resin powder material (9) in said pipe (4);
uniformly diffusing said resin powder material on an entire inner circumferential face of said pipe by rotating said pipe;
urging said resin powder material against said inner circumferential face of said pipe by increasing the rotation speed of said pipe up to a predetermined rotation speed;
melting said resin powder material urged against said inner circumferential face of said pipe by heating said pipe to a predetermined temperature not less than the melting temperature of said resin powder material and less than the foaming temperature of said resin powder material; and
after said resin powder material is entirely melted, cooling said resin powder material while rotating said pipe, thereby forming the lining having a predetermined thickness on said inner circumferential face of said pipe.

2. A method according to claim 1, wherein said resin powder material comprises a powdery fluorine resin material, and the step of melting said resin powder material comprises the step of heating said fluorine resin material at a temperature not less than 320°C and less than 330°C.

3. A method according to claim 1, wherein the step of melting the resin powder material includes the step of, after said resin powder material has reached the predetermined temperature, heating said resin powder material for a predetermined period of time in correspondence with the amount thereof.

4. A method according to claim 1, wherein the step of urging said resin powder material includes the step of rotating said pipe at a predetermined rotation speed in correspondence with the diameter thereof.

5. An apparatus for molding a lining in a pipe, characterized by comprising:
rotating means (20) for rotating said pipe (4) having a powdery resin powder material (9) sealed therein;
heating means (12) for heating said pipe which is rotating;
cooling means (17) for cooling said pipe heated by said heating means;
rotation control means (3a) for controlling said rotating means to rotate said pipe so that said resin powder material is uniformly diffused on the entire inner circumferential face of said pipe, and thereafter increasing the rotation speed of said pipe up to a predetermined rotation speed at which said resin powder material is urged against said inner circumferential face of said pipe with a centrifugal force, and after said pipe is cooled, stopping said rotating means; and
temperature control means (3b) for controlling said heating means, after the rotation speed of said pipe has reached the predetermined rotation speed, to heat said pipe to a temperature not less than the melting temperature of said resin powder material and less than the foaming temperature of said resin powder material, and after said resin powder material is entirely melted, driving said cooling means, thereby cooling said pipe.

6. An apparatus according to claim 5, wherein said resin powder material comprises a powdery fluorine resin material.

7. An apparatus according to claim 6, wherein said temperature control means heat-controls said pipe so that the temperature of said fluorine resin material becomes not less than 320°C and less than 330°C.

8. An apparatus according to claim 5, wherein said temperature control means controls to heat said pipe for a predetermined period of time in correspondence with the amount of said resin powder material after said pipe has reached the predetermined temperature.

9. An apparatus according to claim 5, wherein said rotation control means controls rotation of said pipe at the predetermined rotation speed in correspondence with the diameter of said pipe until said resin powder material is entirely melted.

10. An apparatus according to claim 5, wherein said rotation control means controls rotation of said pipe in accordance with a predetermined rotation increase rate until the rotation speed of said pipe reaches the predetermined rotation speed.

11. An apparatus according to claim 5, wherein said heating means comprises a heater (13) having a heater element (13a) and a blower fan (17) for flowing air heated by said heater to said pipe, and said temperature control means drives said heater element and said blower fan simultaneously when the rotation speed of said pipe has reached the predetermined rotation speed.

12. An apparatus according to claim 11, wherein said cooling means comprises said blower fan that continues the operation after said heater element stops the operation, and said temperature control means stops only the operation of said heater when said resin powder material is entirely melted and blows cooling air to said pipe with said blower fan.

13. An apparatus according to claim 5, wherein said rotating means comprises
a pair of holders (8a, 8b) for sealing opening portions at two ends of said pipe, thereby holding said pipe from said two ends,
a pair of main shafts (5, 6) provided at end portions of said holders to coaxially rotate said holders that hold said pipe, and
a motor (11) for driving at least one of said main shafts to rotate.

14. An apparatus according to claim 13, further comprising a heat-insulated furnace (2) in which said heating means is arranged and said pipe is accommodated to thermally block said pipe from the outside, and at least one temperature sensor (16) provided at least in said pipe, wherein said temperature control means controls said heating means in accordance with an output from said temperature sensor.

15. An apparatus according to claim 5, wherein said pipe is a stainless steel measurement pipe used in an electromagnetic flowmeter.
